# EUROPÄISCHE PATENTANMELDUNG

(11) **EP 2 053 145 A1**
(43) Veröffentlichungstag der Anmeldung: **29.04.2009**
(21) Anmeldenummer: 07020504.2
(22) Anmeldetag: 19.10.2007
(51) Int. Cl.: C23F 1/44, C23G 5/00, B08B 1/00, B08B 3/10, B08B 7/00, B24C 1/08, C25F 5/00, F01D 5/00, F01D 25/00

(54) **Verfahren zur Entfernung einer metallischen Schicht mittels FIC in einem Zwischenschritt**

(71) Anmelder: SIEMENS AKTIENGESELLSCHAFT, 80333 München (DE)
(72) Erfinder: Ladru, Francis-Jurjen, 13587 Berlin (DE); Mensing, Marcus, 13465 Berlin (DE); Nordalm, Alexander, 10249 Berlin (DE)

(57) **Zusammenfassung**

Das erfindungsgemäße Verfahren zur Entfernung von Korrosionsprodukten schlägt vor, in einem vorgeschalteten Zwischenschritt das FIC-Verfahren zu verwenden, bevor eine Säurebehandlung oder eine elektrochemische Behandlung des Bauteils erfolgt.

## Beschreibung

Die Erfindung betrifft ein Verfahren zur Entfernung einer metallischen Schicht, bei dem in einem Zwischenschritt das FIC-Verfahren angewendet wird.

Bei Gasturbinenkomponenten von stationären oder beweglichen Gasturbinen besteht ein Bauteil wie eine Turbinenschaufel aus einem Superlegierungssubstrat, auf der eine MCrAlX-Schicht aufgebracht ist.
Auf der MCrAlX-Schicht kann eine keramische Wärmedämmschicht vorhanden sein.
Zwischen der keramischen Wärmedämmschicht und der metallischen MCrAlX-Schicht kann sich während der Beschichtung mit der keramischen Wärmedämmschicht eine Aluminiumoxid-Schicht (TGO) ausbilden.

Im Rahmen einer Wiederaufarbeitung der Turbinenschaufeln müssen die Schichten vollständig entfernt werden, um neu beschichtet zu werden.

Dabei müssen die Schichten vollständig entfernt werden. Dies ist teilweise immer noch zeitaufwändig, da es teilweise abtragungsresistente Bereiche gibt.

Es ist daher Aufgabe der Erfindung dieses Problem zu lösen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.
- Figuren 1 bis 4: zeigen Verfahrensschritte des Verfahrens,
- Figur 5: eine Gasturbine,
- Figur 6: perspektivisch eine Turbinenschaufel,
- Figur 7: perspektivisch eine Brennkammer,
- Figur 8: Liste von Superlegierungen.

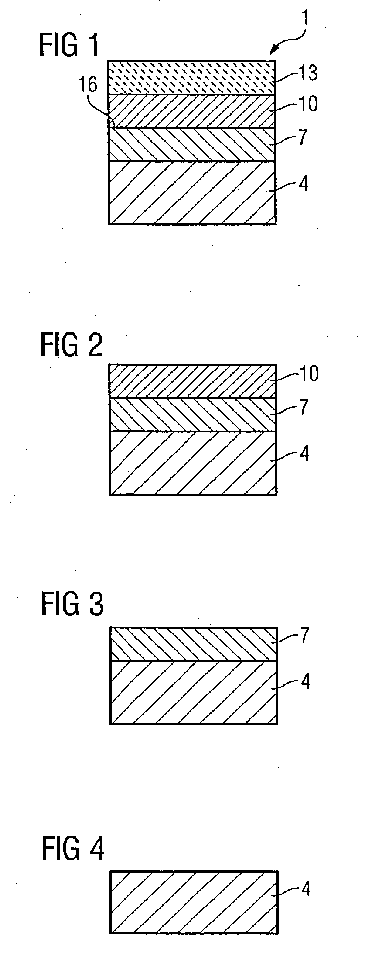

In Figur 1 ist ein Schichtsystem 1 gezeigt, das mit dem Verfahren behandelt wird.

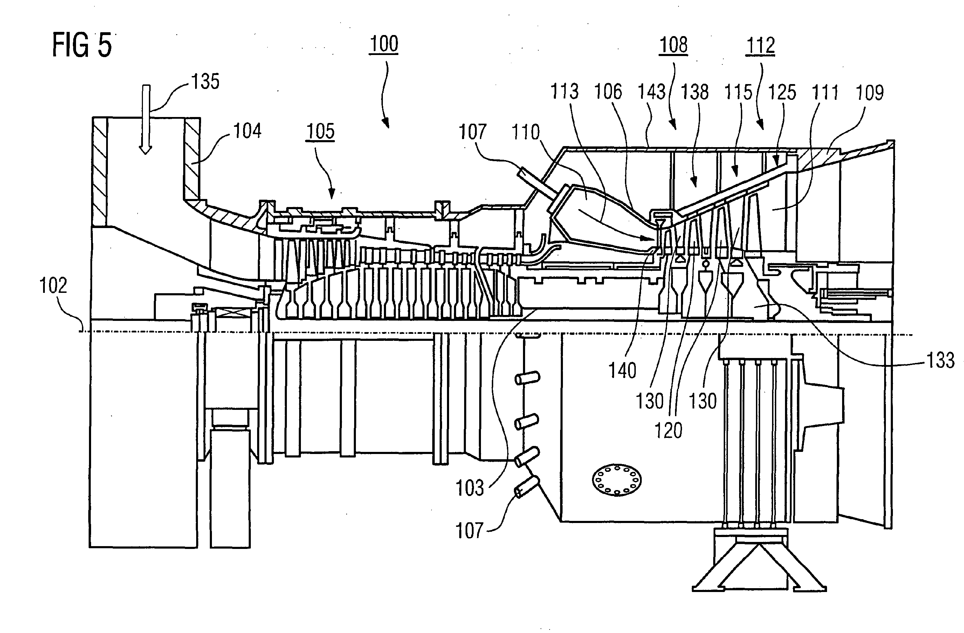

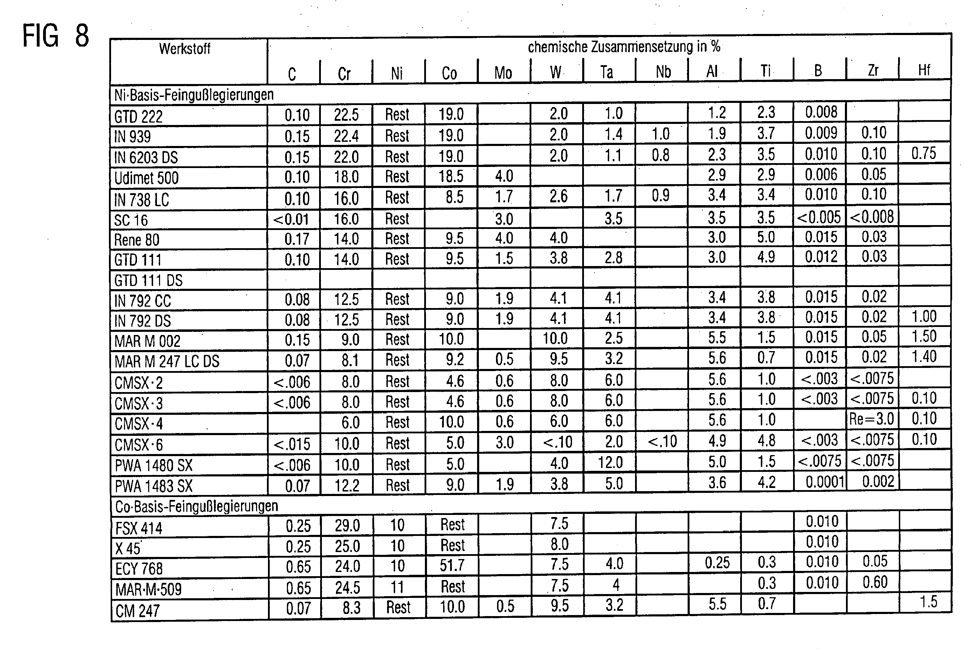

Das Schichtsystem 1 einer Gasturbine 100 weist ein Substrat 4 auf, insbesondere ein metallisches Substrat 4.
Das Substrat 4 weist insbesondere bei Gasturbinenkomponenten 120, 130, 155 (Fig. 5, 6, 7) eine nickel- oder kobaltbasierte Superlegierung gemäß Figur 8 auf, insbesondere besteht es 4 daraus.

Auf dem Substrat 4 ist eine metallische Zwischenschicht 7 vorhanden, die vorzugsweise die Zusammensetzung einer MCrAlX-Legierung aufweist.
Im Betrieb oder schon bei der Herstellung hat sich auf der MCrAlX-Schicht 7, also auf einer metallischen Oberfläche 16, eine Aluminiumoxid-Schicht 10 (TGO = Oxidationsprodukt) und/oder Korrosionsprodukte in der Zwischenschicht 7 gebildet.
Die TGO 10 ist vorzugsweise eine thermisch gewachsene Oxidschicht.
Die äußerste Schicht des Schichtsystems 1 kann eine keramische Wärmedämmschicht 13, vorzugsweise mit einer Zusammensetzung auf Basis von Zirkonoxid oder Pyrochloren, bilden. Die chemische Zusammensetzung der keramischen Wärmedämmschicht unterscheidet sich von denen der Oxidationsprodukte oder der Korrosionsprodukte.

Bei "overlays" bildet eine TGO 10 die äußerste Schicht.

In einem ersten Behandlungsschritt wird die keramische Wärmedämmschicht 13, insbesondere mechanisch entfernt. Dies geschieht vorzugsweise durch eine abrasive Behandlung, insbesondere durch Sandstrahlen. Dabei können auch Teile der Oxidschicht 10 (TGO) entfernt werden, jedoch nicht vollständig (Fig. 2).
Die TGO-Schicht 10 gemäß Figur 2 und/oder Korrosionsprodukte werden dann in einem Zwischenschritt durch Behandlung mit einem Halogenid, vorzugsweise durch ein FIC-Verfahren (Fluorid-Ion-Cleaning) entfernt, das aus dem Stand der Technik bekannt ist.

Das FIC-Verfahren ist nur bekannt, um in dem letzten Behandlungsschritt Oxide wie Aluminiumoxid vollständig aus Rissen zu entfernen.
In diesem Verfahren wird das FIC-Verfahren in einem Zwischenschritt verwendet, um Oberflächenbereiche, also eine TGO-Schicht 10 oder korrodierte Schichtbereiche zumindest teilweise (d.h. zumindest mit 50%), insbesondere vollständig, zu entfernen, um dann einen weiteren Entschichtungsschritt einzuleiten.

Nach diesem FIC-Behandlungsschritt oder nach der Halogenidbehandlung sieht das Schichtsystem wie Figur 3 aus. Vorzugsweise wird noch eine mechanisch, insbesondere eine abrasive Behandlung durchgeführt, die strukturell geschwächte Bereiche von der MCrAlX-Schicht entfernt.
Eventuell vorhandene Oxidreste werden nach der FIC-Behandlung noch mechanisch entfernt, insbesondere durch Sandstrahlen, damit es beim nachfolgenden Behandlungsschritt keine zusätzliche "Entfernungszeit" für solche Reste beansprucht wird.

Danach wird in einem konventionellen Verfahren durch eine Säurebadbehandlung oder durch eine elektrochemische Behandlung eine metallische Schicht 7, insbesondere die metallische MCrAlX-Schicht entfernt, so dass in gewünschter Weise nur noch das Substrat 4 gemäß Figur 4 vorhanden ist.
Dies stellt die letzte chemische Behandlung dar.

Im Stand der Technik wird sowohl die TGO 10 als auch die metallische Schicht 7 nur durch eine Säurebehandlung entfernt.

Das gesamte Entfernungsverfahren der Schichten 7, 10, 13 wird durch die Erfindung beschleunigt, auch wenn ein zusätzlicher Verfahrensschritt (Systemwechsel) eingeführt wird.

Bei dem elektrochemischen Verfahren, also in dem Schritt von Figur 3 nach Figur 4, kann vorzugsweise ein gepulstes elektrochemisches Verfahren verwendet werden.

Vorzugsweise wird die Säurebehandlung oder die elektrochemische Behandlung durch ein abrasives Verfahren, insbesondere Sandstrahlen, unterbrochen.

Ebenso kann das Reinigungsverfahren mit einem Schichtsystem (Overlay) durchgeführt werden, das nach seinem Einsatz wie in Figur 2 aussieht. Je nach Dicke der TGO-Schicht 10 oder der Korrosionsschicht kann auch hier zuerst eine abrasive Behandlung, vorzugsweise Sandstrahlen erfolgen. Solche Schichtsysteme (Overlay) gemäß Figur 2 sind aus der dritten und /oder vierten Stufe einer Gasturbine 100 bekannt, die keine keramische Wärmedämmschicht aufweisen.

Die Figur 5 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen
Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der
Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

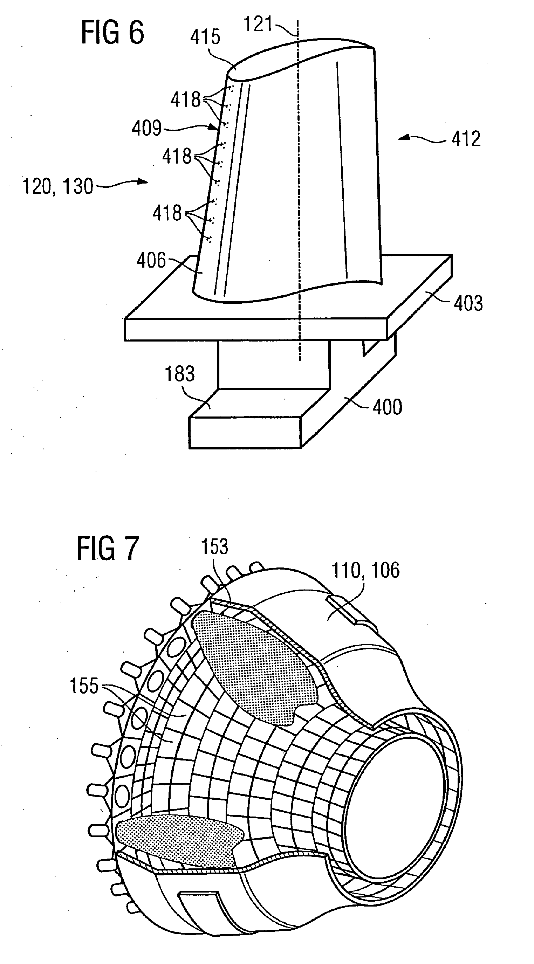

Die Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich ggf. eine schützende
Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 7 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutz-schicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder
Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Verfahren zur Entfernung einer metallischen Schicht (7) eines Bauteils (1, 120, 130, 155),
auf der (7) oder in der (7) Keramiken und/oder Oxide und/oder Korrosionsprodukte vorhanden sind,
bei dem vor einer Säurebehandlung oder
vor einer elektrochemischen Behandlung der metallischen Schicht (7) des Bauteils (1, 120, 130, 155)
eine Entfernung der Keramiken oder der Oxide und/oder der Korrosionsprodukte mittels eines Halogenids,
insbesondere mittels des FIC-Verfahrens erfolgt.

2. Verfahren nach Anspruch 1,
bei dem auf der metallischen Schicht (7) eine äußerste keramische Wärmedämmschicht (13) vorhanden ist,
die (13) keine Oxidationsprodukte und/oder Korrosionsprodukte aufweist, die durch den Einsatz des Bauteils (1, 120, 130, 155) auf der metallischen Schicht (7) gebildet wurden, und bei dem die keramische Wärmedämmschicht (13) nicht durch das FIC-Verfahren,
vorzugsweise mechanisch,
besonders vorzugsweise abrasiv,
ganz besonderes vorzugsweise durch Sandstrahlen,
entfernt wird.

3. Verfahren nach Anspruch 1 oder 2,
bei dem auf der metallischen Schicht (7) eine Aluminiumoxidschicht (10) (TGO) und/oder Korrosionsprodukte vorhanden sind und
bei dem die Aluminiumoxidschicht (10) und/oder das Korrosionsprodukt auf der MCrAlX-Schicht (7) zumindest teilweise, insbesondere vollständig,
durch das FIC-Verfahren entfernt wird, und
insbesondere die metallische Schicht (7) eine MCrAlX-Schicht (7) ist.

4. Verfahren nach Anspruch 1, 2 oder 3,
bei dem das eventuell vorhandene restliche Oxid und/oder die eventuellen restlichen Korrosionsprodukte nach der FIC-Behandlung mechanisch,
insbesondere abrasiv,
entfernt werden.

5. Verfahren nach Anspruch 1, 2, 3 oder 4,
bei dem eine metallische Schicht (7),
insbesondere eine MCrAlX-Schicht (7),
nachdem Oxide und/oder Korrosionsprodukte durch das FIC-Verfahren entfernt wurden,
durch ein elektrochemisches Verfahren entfernt wird.

6. Verfahren nach Anspruch 1,
bei dem die Säurebehandlung oder die elektrochemische Behandlung die letzte chemische Behandlung der Schicht (7) des Bauteils (1, 120, 130, 155) darstellt.

7. Verfahren nach Anspruch 5 oder 6,
bei dem eine elektrochemische Behandlung verwendet wird, insbesondere eine gepulste elektrochemische Behandlung.

8. Verfahren nach Anspruch 5 oder 6,
bei dem eine Säurebehandlung verwendet wird.

9. Verfahren nach Anspruch 5, 6 7 oder 8,
bei dem die Säurebehandlung oder die elektrochemische Behandlung durch ein mechanisches Entfernungsverfahren unterbrochen wird.
